# EUROPÄISCHE PATENTSCHRIFT

(11) **EP 2 933 611 B1**
(45) Veröffentlichungstag und Bekanntmachung des Hinweises auf die Patenterteilung: **26.06.2019**
(21) Anmeldenummer: 15163223.9
(22) Anmeldetag: 10.04.2015
(51) Int. Cl.: G01F 1/84

(54) **CORIOLIS-MASSEDURCHFLUSSMESSGERÄT**
CORIOLIS MASS FLOW MEASURING DEVICE
DÉBITMÈTRE MASSIQUE CORIOLIS

(30) Priorität: 17.04.2014 DE 102014105580
(43) Veröffentlichungstag der Anmeldung: 21.10.2015
(73) Patentinhaber: Krohne AG, 4019 Basel (CH)
(72) Erfinder: Wang, Tao, Rough Common, Canterburry, CT2 9DG (GB)
(74) Vertreter: Gesthuysen Patent- und Rechtsanwälte

(56) Entgegenhaltungen:
- WO-A1-2009/120222
- WO-A1-2013/062538
- WO-A1-2014/031103
- DE-A1-102011 100 092
- US-A- 5 570 300
- US-A1- 2006 042 402

## Beschreibung

Die Erfindung betrifft ein Coriolis-Massedurchflussmessgerät mit mindestens einem zu Schwingungen anregbaren Messrohr, mindestens einem Schwingungserzeuger, mindestens zwei Schwingungsaufnehmern zur Aufnahme gegenläufig beeinflusster Schwingungsanteile der Messrohrschwingung, mindestens einer Auswerteeinrichtung und mit mindestens zwei Haltevorrichtungen zur Halterung der Schwingungsaufnehmer, wobei an der Haltevorrichtung jeweils ein Schwingungsaufnehmer befestigt ist.

Coriolis-Massedurchflussmessgeräte sind im Stand der Technik in einer Vielzahl von Ausgestaltungen bekannt. Massedurchflussmessgeräte, die nach dem Coriolis-Prinzip arbeiten, weisen üblicherweise wenigstens einen Schwingungserzeuger, mit dem das Messrohr zur Schwingung angeregt wird - oder ggf. auch mehrere Messrohre zur Schwingung angeregt werden -, sowie häufig zwei Schwingungsaufnehmer, mit denen die erzielte Schwingung oder die erzielten Schwingungen des Messrohrs erfasst werden, auf. Die Schwingungsaufnehmer sind üblicherweise ein- und auslaufseitig an dem Messrohr befestigt. Ohne Durchfluss sind die Signale der beiden Schwingungsaufnehmer im Wesentlichen phasengleich. Bei einem Massedurchfluss ergibt sich ein- und auslaufseitig eine unterschiedlich gerichtete Corioliskraft, die zu einer Phasenverschiebung zwischen den Auslenkungen und damit der beiden Signale der Schwingungsaufnehmer führt, wobei die Phasenverschiebung proportional dem Massedurchfluss innerhalb des Messrohres ist; das ist damit gemeint, wenn es heißt, dass die Schwingungsaufnehmer zur Aufnahme gegenläufig beeinflusster Schwingungsanteile ausgestaltet sind.

Die Schwingungserzeuger und die Schwingungsaufnehmer sind meist derart aufgebaut, dass sie einen Permanentmagneten sowie eine Spule aufweisen, um auf elektrischem Wege Schwingungen auf die Messrohre zu übertragen bzw. Schwingungen der Messrohre zu erfassen.

Beispielsweise zeigt die WO 2009/120222 A1 ein Coriolis-Massedurchflussmessgerät mit mindestens zwei Messrohren, die über Knotenplatten zu einer Schwingungseinheit zusammengefasst sind, mit mindestens einem Schwingungserzeuger und mit zwei vom Schwingungserzeuger beabstandeten Schwingungssensoreinrichtungen. Ein Schwingungssensor besteht aus einer Spule und einem Permanentmagneten. Die Sensoren sind an den Knotenplatten befestigt, so dass sich zwischen zwei Sensoren die Messrohrebene befindet. Darüber hinaus werden gegenüberliegende Schwingungssensoren offenbart, die im Falle einer seriellen Verschaltung der Sensoren als einzelner Schwingungsaufnehmer mit zwei Sensoren aufgefasst werden können.

Der Anmelderin sind aus der Praxis Coriolis-Massedurchflussmessgeräte mit einem Messrohr oder auch mehrere Messrohren, einem Schwingungserzeuger und zwei Schwingungsaufnehmern bekannt, bei denen die Schwingungsaufnehmer ein- und auslaufseitig jeweils an einer Haltevorrichtung befestigt und durch die Haltevorrichtung mit dem Rohr verbunden sind. Die aus dem Stand der Technik bekannten Coriolis-Massedurchflussmessgeräte weisen jedoch den Nachteil auf, dass sie bei einem Ausfall oder Defekt auch nur eines der Schwingungsaufnehmer nur schwer oder gar nicht ohne Unterbrechung der laufenden Produktion ausgetauscht oder gewartet werden können, was gerade bei der Produktion von hochwertigen Endprodukten erhebliche ökonomische aber auch technische Nachteile mit sich bringen kann. Außerdem wird bei der Produktion von und mit hochwertigen Komponenten ein besonderer Anspruch auf die Messgenauigkeit gelegt. Diese soll nicht nur möglichst akurat sondern auch über einen langen Zeitraum in hoher Güte konstant bleiben.

Der Erfindung liegt daher die Aufgabe zugrunde, ein Coriolis-Massedurchflussmessgerät anzugeben, das wartungsarm ist bzw. auch im laufenden Betrieb einfach repariert werden kann.

Die zuvor hergeleitete Aufgabe ist bei einem gattungsgemäßen Coriolis-Massedurchflussmessgerät dadurch gelöst, dass die Schwingungsaufnehmer jeweils zumindest einen primären Schwingungsaufnehmer und einen sekundären Schwingungsaufnehmer umfassen, und dass der primäre Schwingungsaufnehmer und der sekundäre Schwingungsaufnehmer so mit der Auswerteeinrichtung verbunden sind, dass das Messsignal des primären Schwingungsaufnehmers und das Messsignal des sekundären Schwingungsaufnehmers von der Auswerteeinrichtung separat erfassbar ist. Der primäre Schwingungsaufnehmer und der sekundäre Schwingungsaufnehmer umfassen jeweils zwei miteinander verbundene Sensoren, wobei jeweils ein Sensor des primären Schwingungsaufnehmers und des sekundären Schwingungsaufnehmers auf einer Seite der Haltevorrichtung nebeneinander angeordnet sind.

Bei dem erfindungsgemäßen Coriolis-Massedurchflussmessgerät sind die Schwingungsaufnehmer folglich redundant ausgelegt, wodurch die Absicherung gegen Ausfälle erhöht wird, da bei Defekten eines Schwingungsaufnehmers auf einen zweiten umgeschaltet werden und beispielsweise vor Ort und ohne Produktionsausfall der defekte Aufnehmer getauscht oder gewartet werden kann.

Ein primärer Schwingungsaufnehmer und/oder ein sekundärer Schwingungsaufnehmer umfasst erfindungsgemäß jeweils mindestens zwei miteinander verbundene Sensoren, die beispielsweise auf der Ober- bzw. Unterseite des Messrohres an einer Haltevorrichtung angebracht sein können. An den Haltevorrichtungen sind jeweils nur Teile eines Schwingungsaufnehmers befestigbar. "Teil eines Schwingungsaufnehmers" bedeutet, dass jeweils nur ein erster Teil eines Schwingungsaufnehmers - beispielsweise an einem Befestigungsansatz - befestigt ist. Ein vollständiger Schwingungsaufnehmer für den Betrieb eines Coriolis-Massedurchflussmessgeräts ergibt sich vorzugsweise erst durch das Zusammenwirken von zwei gegenüberliegend angeordneten Sensoren, wobei das Messrohr bei dieser Anordnung zwischen den beiden Sensoren liegt. Auf diese Weise können die beiden Sensoren eines Schwingungsaufnehmers dann im Betrieb des Coriolis-Massedurchflussmessgeräts miteinander Wechselwirken, um so die Schwingungen des Messrohres zu erfassen.

Ein Vorteil der redundanten Schwingungsaufnehmer der vorliegenden Erfindung ist zum einen die Redundanz selbst. Dadurch, dass die Messsignale des primären und des sekundären Schwingungsaufnehmers von der Auswerteeinrichtung separat erfassbar sind, muss der sekundäre Schwingungsaufnehmer nicht dauerhaft in Betrieb sein. Auf diese Weise kann der sekundäre Schwingungsaufnehmer im Falle eines Defekts des primären Schwingungsaufnehmers direkt in Betrieb genommen werden, ohne dass der laufende Prozess unterbrochen werden muss. Ein Austausch oder eine notwendige Reparatur des primären Schwingungssensors ist dann auch im laufenden Betrieb möglich.

Ein weiterer Vorteil der Erfindung ist eine erhöhte Messgenauigkeit bei gleichzeitigem Einsatz des primären und des sekundären Schwingungsaufnehmers. Im dauerhaften Betrieb kann ein Aufsummieren der Signale erfolgen. Ebenfalls können beide Signale dauerhaft miteinander verglichen werden. Dadurch sind Abweichungen vom exakten Wert schnell erfassbar.

Einen weiteren Vorteil der Erfindung stellt eine mögliche Kalibrierfunktion dar. Der primäre Schwingungsaufnehmer wird dabei dauerhaft betrieben, wobei der sekundäre Schwingungsaufnehmer als Referenz dient. Der sekundäre Schwingungsaufnehmer wird also nur von Zeit zu Zeit hinzugeschaltet, um mögliche Abweichungen oder Fehlfunktionen des primären Schwingungssensors zu erkennen und diese anschließend zu beheben. Die Ausgabesignale des primären Schwingungssensors können dann wieder an die des Referenzaufnehmers angeglichen werden, die Auswerteeinheit kann Abweichungen, beispielsweise zu Diagnosezwecken, nach außen melden und/oder kann bei überschreiten einer Abweichungsschwelle einen Alarm signalisieren.

Eine Ausgestaltung der vorliegenden Erfindung sieht vor, dass sich die Sensoren des primären und des sekundären Schwingungsaufnehmers an derselben Haltevorrichtung befinden und dass die Sensoren denselben axialen Abstand zum Schwingungserzeuger aufweisen. Das bedeutet, dass zwei Sensoren auf einer Seite der Haltevorrichtung jeweils übereinander angeordnet sind. Entsprechend dasselbe gilt für die Sensoren auf der anderen Seite der Haltevorrichtung, so dass sich die Sensoren insgesamt auf derselben Achse befinden. Da ein Schwingungsaufnehmer jeweils zwei Sensoren umfasst, bietet sich eine vielfältige Verschaltungsmöglichkeit der Sensoren an, um einen primären und einen sekundären Schwingungsaufnehmer zu bilden. Eine Ausgestaltung sieht vor, dass die beiden außenliegenden Sensoren, d.h. die beiden Sensoren, deren Abstand zum Messrohr größer ist, den primären oder sekundären Schwingungsaufnehmer bilden und die jeweils innenliegenden Sensoren, d.h. die Sensoren, deren Abstand zum Messrohr kleiner ist, den anderen Schwingungsaufnehmer bilden. Ebenso ist eine Kombination aus inneren und äußeren Sensoren möglich, so dass insgesamt vier verschiedene Verschaltungsmöglichkeiten in einer Ausgestaltung realisiert werden können.

Eine weitere Ausgestaltung der Erfindung sieht vor, dass der primäre Schwingungsaufnehmer und der sekundäre Schwingungsnehmer voneinander verschiedene Abstände zum Schwingungserzeuger aufweisen, d.h., dass die jeweils zwei Sensoren auf einer Seite der Haltevorrichtung auf einer Achse liegen die in etwa parallel zum Messrohr verläuft. Auch bei dieser Ausgestaltung ergeben sich vier Verschaltungsmöglichkeiten, um den primären und sekundären Schwingungsaufnehmer zu bilden. So kann der primäre Schwingungsaufnehmer aus den beiden Sensoren gebildet werden, die sich entweder näher oder weiter entfernt vom Schwingungserzeuger befinden, oder aber aus jeweils einem Sensor der einen größeren Abstand zum Schwingungserzeuger aufweist und aus einem Sensor, der einen kleineren Abstand zum Schwingungserzeuger aufweist. Ein Vorteil dieser Ausgestaltung ist die Möglichkeit der kompakteren Bauweise der Haltevorrichtung, da diese durch die Anordnung der nebeneinander liegenden Sensoren schmaler ausfallen kann.

In einer weiteren Ausgestaltung der Erfindung besteht die Haltevorrichtung aus einem ersten und einem zweiten Teil, so dass der primäre Schwingungsaufnehmer und der sekundäre Schwingungsaufnehmer jeweils an zwei separaten Teilen der Haltevorrichtung befestigt sind. Die Anordnung der Sensoren erfolgt dabei vorzugsweise, wie oben beschrieben, durch unterschiedliche Abstände zum Schwingungserzeuger, es sind aber auch Konstruktionen mit gleichen Abständen denkbar. Auch bei der Verschaltung der Sensoren zur Bildung des primären und des sekundären Schwingungsaufnehmers ergeben sich vier Kombinationsmöglichkeiten. Zwei Möglichkeiten sind aber jeweils gegeben durch die Anordnung der Sensoren des primären Schwingungsaufnehmers jeweils auf dem ersten Teil der Haltevorrichtung oder auf dem zweiten Teil der Haltevorrichtung, wobei der primäre Schwingungsaufnehmer dadurch entweder einen größeren oder kleineren Abstand zum Schwingungserzeuger aufweist als die Sensoren des sekundären Schwingungsaufnehmers. Ebenso ist es möglich, dass ein Sensor des primären Schwingungsaufnehmers am ersten Teil der Haltevorrichtung und der andere Sensor am zweiten Teil der Haltevorrichtung befestigt ist, so dass sich auch hier die Verschaltungen des primären und des sekundären Schwingungssensors überkreuzen.

Im Einzelnen gibt nun eine Vielzahl von Möglichkeiten das erfindungsgemäße Coriolis-Massedurchflussmessgerät auszugestalten und weiterzubilden. Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel eines Coriolis-Massedurchflussmessgerätes in perspektivischer Ansicht,
- Fig. 2a: ein Ausführungsbeispiel einer Haltevorrichtung mit primärem und sekundärem Schwingungsaufnehmer in einer Frontansicht,
- Fig. 2b: ein Ausführungsbeispiel einer Haltevorrichtung mit Schwingungsaufnehmer in einer Draufsicht,
- Fig. 2c: ein Ausführungsbeispiel einer Haltevorrichtung mit primärem und sekundärem Schwingungsaufnehmer in perspektivischer Ansicht,
- Fig. 3: ein Ausführungsbeispiel einer Verschaltung der Sensoren des primären und sekundären Schwingungsaufnehmers mit gleichem axialen Abstand zum Schwingungserzeuger,
- Fig. 4: ein Ausführungsbeispiel eines Coriolis-Massedurchflussmessgerätes in perspektivischer Ansicht,
- Fig. 5a: ein Ausführungsbeispiel einer Haltevorrichtung mit primärem und sekundärem Schwingungsaufnehmer in einer Frontansicht,
- Fig. 5b: ein Ausführungsbeispiel einer Haltevorrichtung mit Schwingungsaufnehmer in einer Draufsicht,
- Fig. 5c: ein Ausführungsbeispiel einer Haltevorrichtung mit primärem und sekundärem Schwingungsaufnehmer in perspektivischer Ansicht,
- Fig. 6: ein Ausführungsbeispiel einer Verschaltung der Sensoren des primären und sekundären Schwingungsaufnehmers mit verschiedenen axialen Abständen zum Schwingungserzeuger,
- Fig. 7: ein weiteres Ausführungsbeispiel einer Verschaltung der Sensoren des primären und sekundären Schwingungsaufnehmers mit verschiedenen axialen Abständen zum Schwingungserzeuger, und
- Fig. 8: ein Ausführungsbeispiel eines Coriolis-Massedurchflussmessgerätes in perspektivischer Ansicht.

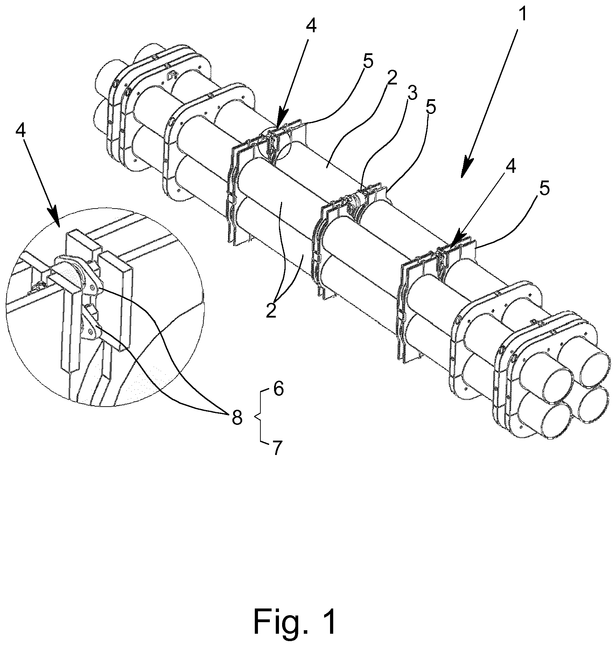

Fig. 1 zeigt ein erfindungsgemäßes Ausführungsbeispiel eines Coriolis-Massedurchflussmessgerätes 1 mit vier Messrohren 2, einem Schwingungserzeuger 3, jeweils zwei Schwingungsaufnehmern 4 und drei Haltevorrichtungen 5. Jeder Schwingungsaufnehmer 4 umfasst einen primären Schwingungsaufnehmer 6 und einen sekundären Schwingungsaufnehmer 7 und jeder einzelne Schwingungsaufnehmer 4 wird aus zwei miteinander verschalteten Sensoren 8 gebildet. Dadurch, dass sich der Schwingungserzeuger 3 zwischen den Schwingungsaufnehmern 4 befindet, können die gegenläufig beeinflussten Schwingungen, die aufgrund des Coriolis Effekts durch das strömende Fluid hervorgerufen werden, erfasst werden. Die Schwingungsaufnehmer 4 und Schwingungserzeuger 3 sind in diesem Ausführungsbeispiel mit den Haltevorrichtungen 5 an den Messrohren 2 befestigt.

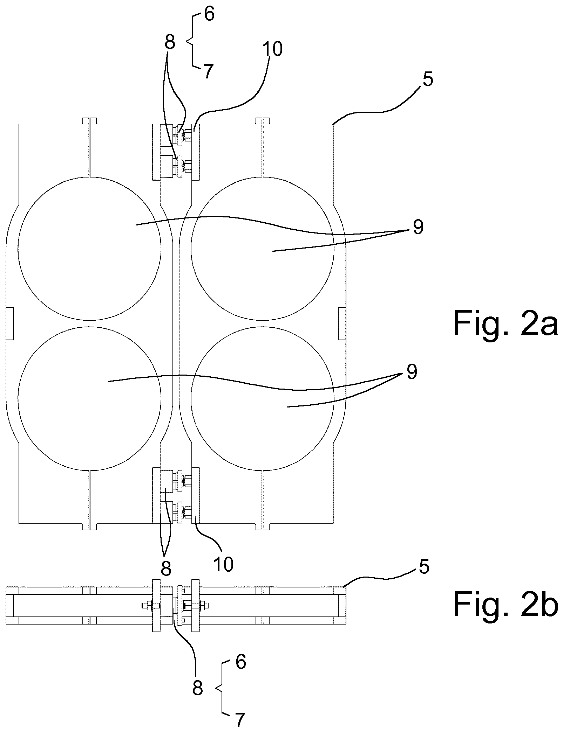

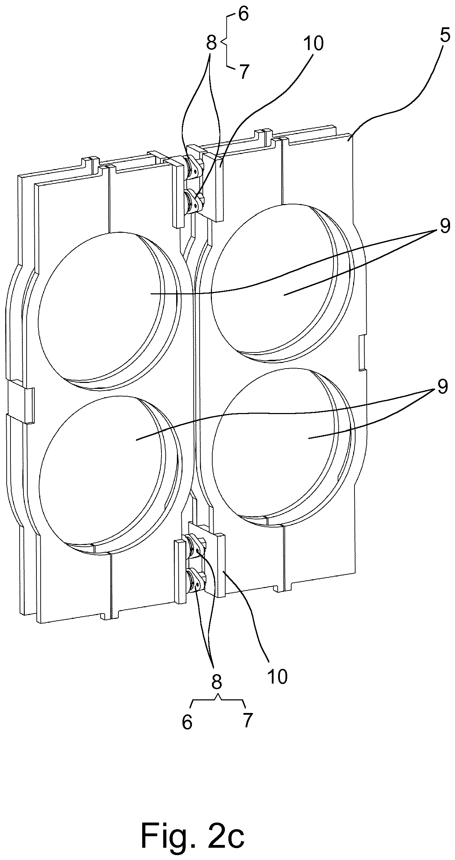

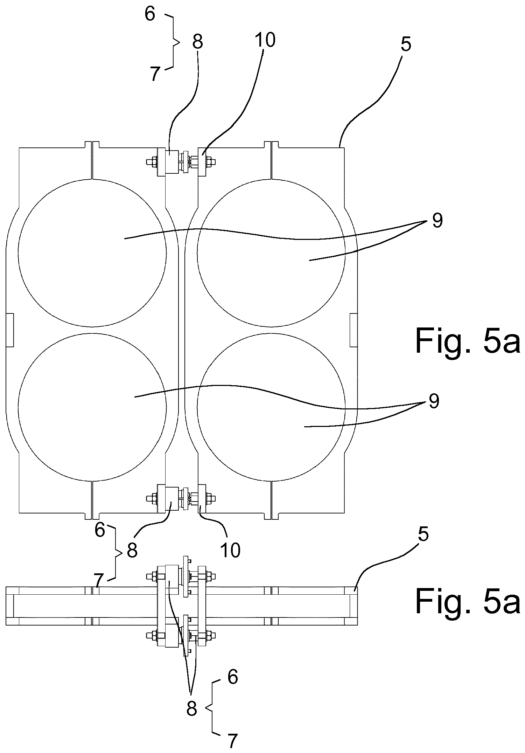

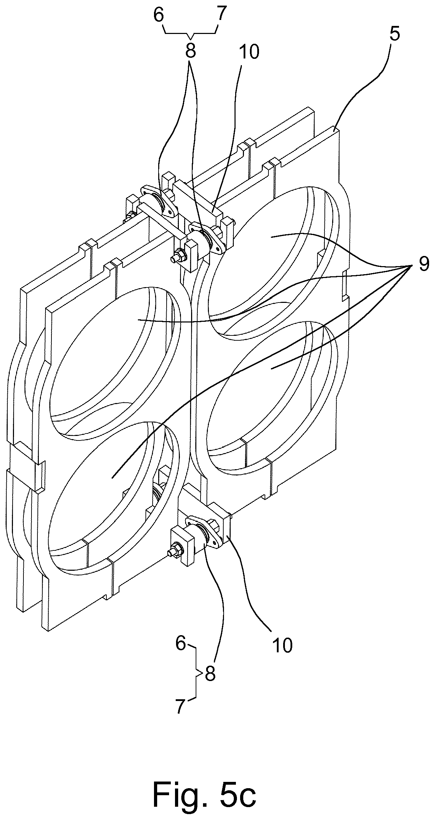

In Fig. 2 ist insgesamt in verschiedenen Ansichten dargestellt ein Ausführungsbeispiel einer Haltevorrichtung 5 mit einem primären Schwingungsaufnehmer 6 und einem sekundären Schwingungsaufnehmer 7. In den Fig. 1 und 5 weisen die zugeordneten Sensoren 8 den gleichen axialen Abstand zum Schwingungserzeuger 3 aufweisen. Zu der Haltevorrichtung 5 sind Aussparungen 9 vorgesehen, so dass sie auf die in Fig. 1 dargestellten Messrohre 2 aufgeschoben und gegebenenfalls mit ihnen verschweißt werden können. Die Sensoren 8 der Schwingungsaufnehmer 4 sind an Befestigungsansätzen 10 angebracht.

Die Fig. 2a und Fig. 2b zeigen dieselbe Haltevorrichtung 5 wie Fig. 2c in unterschiedlichen Perspektiven. Durch die Draufsicht aus Fig. 2b wird deutlich, dass die Sensoren 8 übereinander angeordnet sind und dass sich alle Sensoren 8 auf einer Achse befinden.

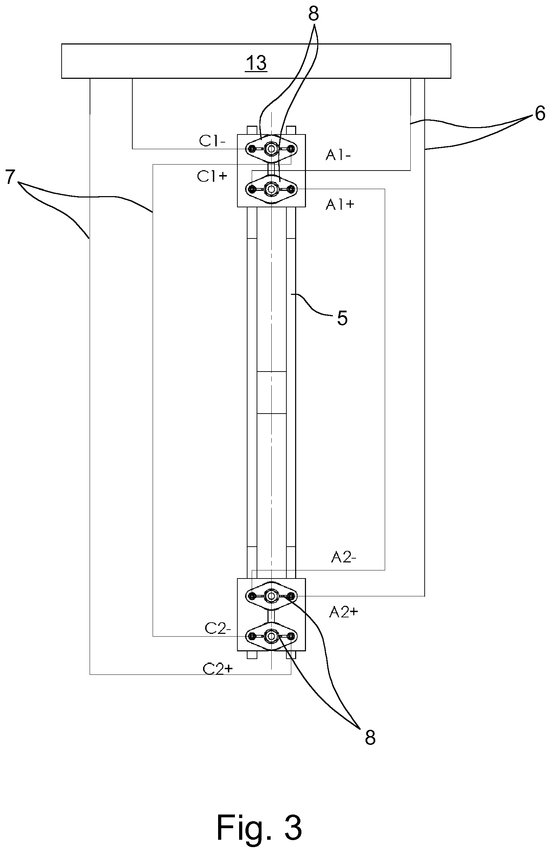

Fig. 3 zeigt eine mögliche Verschaltung der Sensoren 8, um durch die Verbindung von jeweils zwei Sensoren 8 einen primären Schwingungssensor 6 und einen sekundären Schwingungssensor 7 zu bilden. In diesem Ausführungsbeispiel, bei dem die Sensoren 8 denselben axialen Abstand zum Schwingungserzeuger 3 aufweisen (Fig. 1 und Fig. 5), wird der primäre Schwingungsaufnehmer 6 durch die Verbindung der beiden Sensoren 8 gebildet, die einen kürzeren Abstand zum nicht abgebildeten Messrohr aufweisen. Der sekundäre Schwingungsaufnehmer 7 ist durch die Verschaltung der beiden äußeren Sensoren 8, also der Sensoren 8 die jeweils einen größeren Abstand zum Messrohr haben, gegeben. Durch Auswerteeinrichtung 13 können die Signale der beiden Schwingungsaufnehmer 4 dann verarbeitet werden.

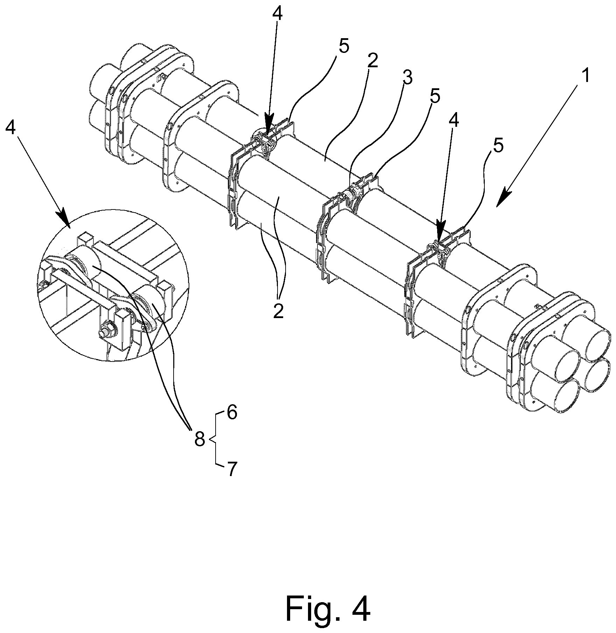

Fig. 4 zeigt ein Coriolis-Massedurchflussmessgerät 1 gemäß Fig. 1, wobei die Sensoren 8 der Schwingungsaufnehmer 4 in diesem Ausführungsbeispiel unterschiedliche axiale Abstände zum Schwingungserzeuger 3 aufweisen.

In Fig. 5c wird der Unterschied durch die perspektivische Darstellung der Haltevorrichtung 5 deutlicher. Die Sensoren 8 liegen nun nicht mehr auf einer Achse, vielmehr liegen jeweils zwei Sensoren 8 auf einer zum Messrohr 2 nahezu parallelen Achse. Dabei sind natürlich weitere Ausgestaltungen möglich, bei denen zwei Sensoren auf einer Seite der Haltevorrichtung 5 nicht denselben Abstand zum nicht dargestellten Messrohr 2 aufweisen.

Die Fig. 5a und Fig. 5b zeigen dieselbe Haltevorrichtung 5 wie Fig. 5c in unterschiedlichen Perspektiven. Durch die Draufsicht aus Fig. 5b wird deutlich, dass die Sensoren 8 auf einer Seite der Haltevorrichtung 5 nebeneinander angeordnet sind. Die gegenüberliegenden Sensoren 8 sind in der Draufsicht kongruent, d. h. zwei gegenüberliegende Sensoren 8 und zwei nebeneinander liegende Sensoren befinden sich jeweils auf einer Achse.

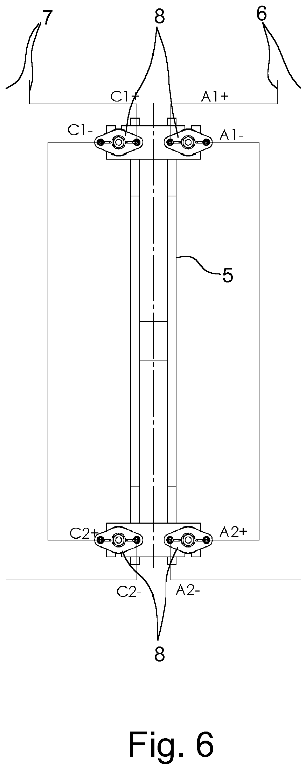

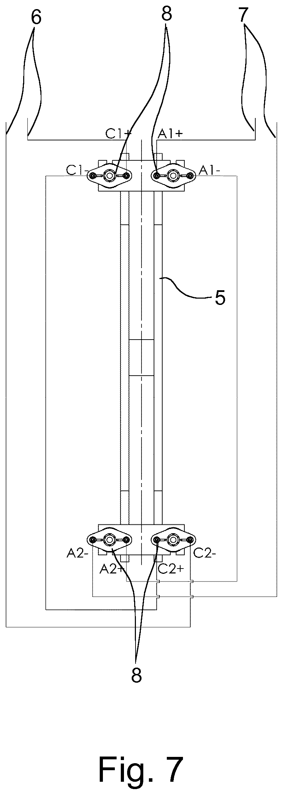

Die Fig. 6 und Fig. 7 zeigen weitere Verschaltungsmöglichkeiten der Sensoren 8 gemäß dem Ausführungsbeispiel nach Fig. 4 und Fig. 5. Der primäre Schwingungsaufnehmer 6 kann beispielsweise durch die Verschaltung von zwei Sensoren gebildet werden, die sich auf einer Achse befinden, die orthogonal zum Messrohr 2 liegt (Fig. 6). Ebenso ist es möglich, dass die Sensoren 8 "über kreuz" verschaltet werden (Fig. 7) und jeweils ein Sensor 8 einen größeren Abstand zum Schwingungserzeuger 3 aufweist als der andere.

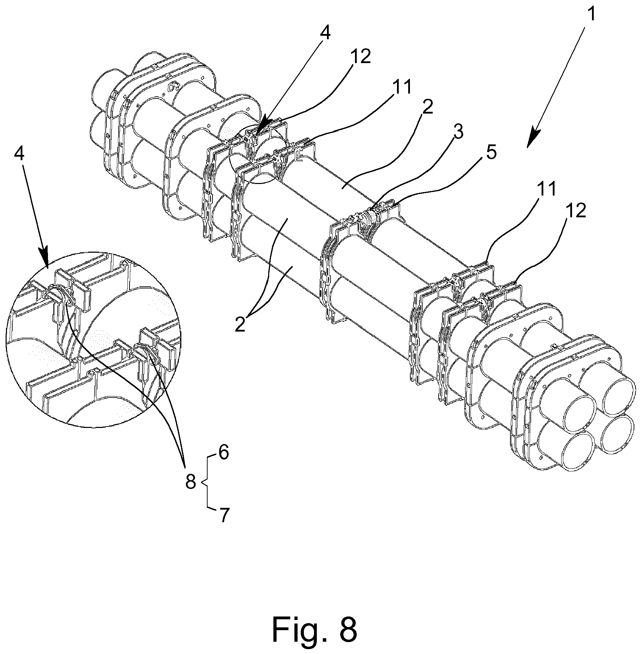

Fig. 8 zeigt ein Ausführungsbeispiel eines erfindungsgemäßen Coriolis-Massedurchflussmessgerätes 1 bei dem die Haltevorrichtung 5 aus einem ersten Teil 11 und einem zweiten Teil 12 besteht. An den Befestigungsansätzen 10 der Haltevorrichtung 5 sind wie bei den vorhergehenden Ausführungsbeispielen die Sensoren 8 befestigt.

Es ist möglich, dass sich der primäre Schwingungsaufnehmer 6 entweder nur am ersten Teil 11 oder zweiten Teil 12 der Haltevorrichtung 5 befindet, oder aber sowohl am ersten Teil 11 als auch am zweiten Teil 12. Die Verschaltung der Sensoren 8 kann auch dabei wie beim vorangegangen Ausführungsbeispiel realisiert werden.

## Patentansprüche

1. Coriolis-Massedurchflussmessgerät (1) mit mindestens einem zu Schwingungen anregbaren Messrohr (2), mindestens einem Schwingungserzeuger (3), mindestens zwei Schwingungsaufnehmern (4) zur Aufnahme gegenläufig beeinflusster Schwingungsanteile der Messrohrschwingung, mindestens einer Auswerteeinrichtung (13) und mit mindestens zwei Haltevorrichtungen (5) zur Halterung der Schwingungsaufnehmer (4), wobei an jeder der Haltevorrichtungen (5) jeweils ein Schwingungsaufnehmer (4) befestigt ist, wobei die Schwingungsaufnehmer (4) jeweils einen primären Schwingungsaufnehmer (6) und einen sekundären Schwingungsaufnehmer (7) umfassen, wobei der primäre Schwingungsaufnehmer (6) und der sekundäre Schwingungsaufnehmer (7) so mit der Auswerteeinrichtung verbunden sind, dass das Messsignal des primären Schwingungsaufnehmers (6) und das Messsignal des sekundären Schwingungsaufnehmers (7) von der Auswerteeinrichtung separat erfassbar sind,
wobei der primäre Schwingungsaufnehmer (6) und der sekundäre Schwingungsaufnehmer (7) jeweils zwei miteinander verbundene Sensoren (8) umfassen und wobei jeweils ein Sensor (8) des primären Schwingungsaufnehmers (6) und des sekundären Schwingungsaufnehmers (7) auf einer Seite der Haltevorrichtung (5) nebeneinander angeordnet sind.

2. Coriolis-Massedurchflussmessgerät (1) nach Anspruch 1, **dadurch gekennzeichnet, dass** die Sensoren (8) des Schwingungsaufnehmers (4) an gegenüberliegenden Seiten der Haltevorrichtung (5) befestigt sind, sodass das Messrohr (2) zwischen den beiden Sensoren (8) liegt.

3. Coriolis-Massedurchflussmessgerät (1) nach einem der Ansprüche 1 bis 2, **dadurch gekennzeichnet, dass** der primäre Schwingungsaufnehmer (6) und der sekundäre Schwingungsaufnehmer (7) denselben axialen Abstand zum Schwingungserzeuger (3) aufweisen, auf einer Achse, die in etwa parallel zum Messrohr (2) verläuft.

4. Coriolis-Massedurchflussmessgerät (1) nach den Ansprüchen 2 und 3, **dadurch gekennzeichnet, dass** die Sensoren (8) des primären Schwingungsaufnehmers (6) einen kleineren oder größeren Abstand zum Messrohr (2) aufweisen, als die Sensoren (8) des sekundären Schwingungsaufnehmers (7).

5. Coriolis-Massedurchflussmessgerät (1) nach den Ansprüchen 2 und 3, **dadurch gekennzeichnet, dass** die gegenüberliegenden Sensoren (8) des primären Schwingungsaufnehmers (6) und/oder die gegenüberliegenden Sensoren (8) des sekundären Schwingungsaufnehmers (7) verschiedene Abstände zum Messrohr (2) haben.

6. Coriolis-Massedurchflussmessgerät (1) nach einem der Ansprüche 1 bis 2, **dadurch gekennzeichnet, dass** der primäre Schwingungsaufnehmer (6) und der sekundäre Schwingungsaufnehmer (7) voneinander verschiedene axiale Abstände zum Schwingungserzeuger (3) aufweisen, auf einer Achse, die in etwa parallel zum Messrohr (2) verläuft.

7. Coriolis-Massedurchflussmessgerät (1) nach einem der Ansprüche 1 bis 6, **dadurch gekennzeichnet, dass** der primäre Schwingungsaufnehmer (6) und der sekundäre Schwingungsaufnehmer (7) jeweils an zwei separaten Teilen der Haltevorrichtung (5) befestigt sind.

8. Coriolis-Massedurchflussmessgerät (1) nach Anspruch 6 oder 7, **dadurch gekennzeichnet, dass** die Sensoren (8) des primären Schwingungsaufnehmers (6) und/oder die Sensoren des sekundären Schwingungsaufnehmers (7) jeweils unterschiedliche Abstände zum Schwingungserzeuger (3) aufweisen.

9. Coriolis-Massedurchflussmessgerät (1) nach einem der Ansprüche 1 bis 8, **dadurch gekennzeichnet, dass** die Auswerteeinrichtung (13) die Signale des primären Schwingungsaufnehmers (6) und die Signale des sekundären Schwingungsaufnehmers (7) gleichzeitig auswerten kann, sodass eine höhere Messwertgenauigkeit durch Aufsummieren der Signale erreicht wird.

10. Coriolis-Massedurchflussmessgerät (1) nach einem der Ansprüche 1 bis 8, **dadurch gekennzeichnet, dass** die Auswerteeinrichtung (13) nur die Signale des primären Schwingungsaufnehmers (6) oder des sekundären Schwingungsaufnehmers (7) dauerhaft auswertet und die Signale des anderen Schwingungsaufnehmers (4) als Referenz für die Kalibrierung des dauerhaft eingesetzten Schwingungsaufnehmers (4) genutzt werden.

## Claims

1. Coriolis mass flowmeter (1) having at least one measuring tube (2) excitable to oscillations, at least one oscillation generator (3), at least two oscillation sensors (4) for receiving opposingly influenced oscillation parts of the measuring tube oscillation, at least one evaluation unit (13) and at least two holding devices (5) for holding the oscillation sensors (4), wherein one oscillation sensor (4) is attached to each holding device (5), wherein the oscillation sensors (4) each comprise at least one primary oscillation sensor (6) and a secondary oscillation sensor (7), wherein the primary oscillation sensor (6) and the secondary oscillation sensor (7) are connected to the evaluation unit (13) in such a manner that the measuring signal of the primary oscillation sensor (6) and the measuring signal of the secondary oscillation sensor (7) can be detected separately by the evaluation unit (13), wherein the primary oscillation sensor (6) and/or the secondary oscillation sensor (7) comprise at least two sensors (8) connected to one another, wherein one sensor (8) of each the primary oscillation sensor (6) and the secondary oscillation sensor (7) are arranged next to one another on one side of the holding device (5).

2. Coriolis mass flowmeter (1) according to claim 1, **characterized in that** the sensors (8) of the oscillation sensors (4) are attached on opposite sides of the holding device (5), so that the measuring tube (2) is located between the two sensors (8).

3. Coriolis mass flowmeter (1) according to claim 1 or 2, **characterized in that** the primary oscillation sensor (6) and the secondary oscillation sensor (7) have the same axial distance to the oscillation generator (3), on one axis that runs approximately parallel to the measuring tube.

4. Coriolis mass flowmeter (1) according to claims 2 and 3, **characterized in that** the sensors (8) of the primary oscillation sensor (6) have a smaller or greater distance to the measuring tube (2) than the sensors (8) of the secondary oscillation sensor (7).

5. Coriolis mass flowmeter (1) according to claims 2 and 3, **characterized in that** the opposingly arranged sensors (8) of the primary oscillation sensor (6) and/or the opposingly arranged sensors (8) of the secondary oscillation sensor (7) have different distances to the measuring tube (2).

6. Coriolis mass flowmeter (1) according to any one of claims 1 to 2, **characterized in that** the primary oscillation sensor (6) and the secondary oscillation sensor (7) have axial distances to the oscillation generator (3) that differ from one another, on one axis that runs approximately parallel to the measuring tube (2).

7. Coriolis mass flowmeter (1) according to any one of claims 1 to 6, **characterized in that** the primary oscillation sensor (6) and the secondary oscillation sensor (7) are each attached to two separate parts of the holding device (5).

8. Coriolis mass flowmeter (1) according to claim 6 or 7, **characterized in that** the sensors (8) of the primary oscillation sensor (6) and/or the sensors (8) of the secondary oscillation sensor (7) each have different distances to the oscillation generator (3).

9. Coriolis mass flowmeter (1) according to any one of claims 1 to 8, **characterized in that** the evaluation unit (13) can simultaneously evaluate the signals of the primary oscillation sensor (6) and the signals of the secondary oscillation sensor (7), so that a higher measuring accuracy can be achieved by adding up the signals.

10. Coriolis mass flowmeter (1) according to any one of claims 1 to 8, **characterized in that** the evaluation unit (13) evaluates only the signals of the primary oscillation sensor (6) or of the secondary oscillation sensor (7) permanently and the signals of the other oscillation sensor (4) are used as a reference for the calibration of the permanently used oscillation sensor (4).

## Revendications

1. Débitmètre massique à effet Coriolis (1) comprenant au moins un tube de mesure (2) pouvant être excité en oscillations, au moins un générateur d'oscillations (3), au moins deux enregistreurs d'oscillations (4) destinés à enregistrer les composantes d'oscillation influencées en sens contraire de l'oscillation du tube de mesure, au moins un dispositif d'interprétation (13) et comprenant au moins deux arrangements de maintien (5) destinés à maintenir les enregistreurs d'oscillations (4), un enregistreur d'oscillations (4) étant respectivement fixé à chacun des arrangements de maintien (5), les enregistreurs d'oscillations (4) comportant respectivement un enregistreur d'oscillations primaire (6) et un enregistreur d'oscillations secondaire (7), l'enregistreur d'oscillations primaire (6) et l'enregistreur d'oscillations secondaire (7) étant reliés au dispositif d'interprétation de telle sorte que le signal de mesure de l'enregistreur d'oscillations primaire (6) et le signal de mesure de l'enregistreur d'oscillations secondaire (7) peuvent être acquis séparément par le dispositif d'interprétation,
l'enregistreur d'oscillations primaire (6) et l'enregistreur d'oscillations secondaire (7) comportant respectivement deux capteurs (8) reliés l'un à l'autre et un capteur (8) de l'enregistreur d'oscillations primaire (6) et de l'enregistreur d'oscillations secondaire (7) étant respectivement disposé l'un à côté de l'autre sur un côté de l'arrangement de maintien (5) .

2. Débitmètre massique à effet Coriolis (1) selon la revendication 1, **caractérisé en ce que** les capteurs (8) des enregistreurs d'oscillations (4) sont fixés à des côtés opposés de l'arrangement de maintien (5), de sorte que le tube de mesure (2) se trouve entre les deux capteurs (8).

3. Débitmètre massique à effet Coriolis (1) selon l'une des revendications 1 à 2, **caractérisé en ce que** l'enregistreur d'oscillations primaire (6) et l'enregistreur d'oscillations secondaire (7) présentent le même écart axial par rapport au générateur d'oscillations (3), sur un axe qui s'étend approximativement en parallèle du tube de mesure (2).

4. Débitmètre massique à effet Coriolis (1) selon l'une des revendications 2 et 3, **caractérisé en ce que** les capteurs (8) de l'enregistreur d'oscillations primaire (6) présentent un écart plus petit ou plus grand par rapport au tube de mesure (2) que les capteurs (8) de l'enregistreur d'oscillations secondaire (7).

5. Débitmètre massique à effet Coriolis (1) selon l'une des revendications 2 et 3, **caractérisé en ce que** les capteurs (8) opposés de l'enregistreur d'oscillations primaire (6) et/ou les capteurs (8) opposés de l'enregistreur d'oscillations secondaire (7) possèdent des écarts différents par rapport au tube de mesure (2).

6. Débitmètre massique à effet Coriolis (1) selon l'une des revendications 1 à 2, **caractérisé en ce que** l'enregistreur d'oscillations primaire (6) et l'enregistreur d'oscillations secondaire (7) présentent des écarts axiaux différents l'un de l'autre par rapport au générateur d'oscillations (3), sur un axe qui s'étend approximativement en parallèle du tube de mesure (2).

7. Débitmètre massique à effet Coriolis (1) selon l'une des revendications 1 à 6, **caractérisé en ce que** l'enregistreur d'oscillations primaire (6) et l'enregistreur d'oscillations secondaire (7) sont respectivement fixés à deux parties séparées de l'arrangement de maintien (5).

8. Débitmètre massique à effet Coriolis (1) selon la revendication 6 ou 7, **caractérisé en ce que** les capteurs (8) de l'enregistreur d'oscillations primaire (6) et/ou les capteurs (8) de l'enregistreur d'oscillations secondaire (7) présentent respectivement des écarts différents par rapport au générateur d'oscillations (3).

9. Débitmètre massique à effet Coriolis (1) selon l'une des revendications 1 à 8, **caractérisé en ce que** le dispositif d'interprétation (13) peut interpréter simultanément les signaux de l'enregistreur d'oscillations primaire (6) et les signaux de l'enregistreur d'oscillations secondaire (7), de sorte qu'une précision de mesure plus élevée est obtenue par addition des signaux.

10. Débitmètre massique à effet Coriolis (1) selon l'une des revendications 1 à 8, **caractérisé en ce que** le dispositif d'interprétation (13) n'interprète en continu que les signaux de l'enregistreur d'oscillations primaire (6) ou de l'enregistreur d'oscillations secondaire (7) et les signaux de l'autre enregistreur d'oscillations (4) sont utilisés comme référence pour l'étalonnage de l'enregistreur d'oscillations (4) utilisé en continu.
